Europäisches Patentamt

European Patent Office

Office européen des brevets

(11) Publication number: **0 023 138**
A2

# (12) EUROPEAN PATENT APPLICATION

(21) Application number: 80302424.9

(22) Date of filing: 18.07.80

(51) Int. Cl.³: **F 16 D 55/224**

(30) Priority: 20.07.79 JP 93115 79
20.07.79 JP 93116 79

(43) Date of publication of application:
28.01.81 Bulletin 81 4

(84) Designated Contracting States:
DE FR GB IT

(71) Applicant: TOKICO LTD.
6-3, Fujimi, 1-Chome Kawasaki-Ku
Kawasaki-shi Kanagawa-ken(JP)

(72) Inventor: Oshima, Harumi
4309-2-204, Akua-cho Seya-Ku
Yokohama-Shi Kanagawa-Ken(JP)

(74) Representative: Jones, Colin et al,
W.P. THOMPSON & CO. Coopers Building Church Street
Liverpool L1 3AB(GB)

(54) Disc brake.

(57) A disc brake comprising a carrier member 4 secured to a non-rotatable part of a vehicle, a caliper member 7 supported on the carrier member 4 and being displaceable relative thereto in the direction of the axis of a rotatable disc, and a pair of parallel pins 5,6 guiding the displacement of the caliper member 7.

In order to prevent accidental separation of the caliper and carrier members 4,7 during pad replacement engaging portions 10,11, 13,12, 15,16 are respectively provided on the carrier and caliper members 4,7 to engage with one another when one of the pins 6 is removed, the caliper member 7 is angularly rotated around the other pin 5 by a predetermined angle, and when the caliper member 7 is displaced in one direction with respect to the axis of the disc.

Fig. I

EP 0 023 138 A2

-1-

DESCRIPTION

"DISC BRAKE"

The present invention relates to improvements in disc brakes.

In particular, the invention relates to disc brakes of the type including a carrier member, a caliper member supported on the carrier member and being slidable relative to the carrier member in the direction of the axis of a disc, and a pair of pins guiding the sliding movement or the displacement of the caliper member.

In a known disc brake the carrier member is secured to a non-rotatable part of a vehicle, and the pins are secured to the caliper member and are received respectively in bores formed in the carrier member. Two opposing friction pads are disposed on the opposite sides of the disc, and one of them is directly pressed against the disc by a piston working in a cylinder incorporated in the caliper member, and the other friction pad is pressed against the disc by the reaction force transmitted through the caliper member. The caliper member includes a bridge portion for straddling a portion of the circumference of the disc and transmitting the reaction force. At least one or both friction pads are supported on the carrier member and are slidable in the direction of the axis of the disc. The bridge portion of the carrier member is located radially outwards of the friction pads, and a pad spring is disposed between the friction pads and the bridge portion, thereby retaining the friction pads. In exchanging the friction pads, one of the pins is removed and the caliper member is angularly rotated around the other pin so as to allow the friction pads to be removed from the disc brake by extracting the friction pads in the radially outward direction with respect to the disc.

In the friction pad exchanging operation there have been encountered difficulties such that the caliper member supported on the carrier member by a single pin will sometimes move excessively in the axial direction so that the pin escapes out of the bore, thereby the caliper member is disassembled from the carrier member. When the caliper member is accidentally disassembled from the carrier member, dust may attach on the pin and the bore, thus it is troublesome and time consuming to reassemble the caliper member with the carrier member. Further, in the pad exchanging operation, the caliper member must be maintained in the angularly rotated position so that the caliper member will not hinder the friction pads being extracted in the radially outward direction and the friction pads being inserted in the radially inward direction, however, the caliper member may return from the angularly rotated position, thereby interfering the pad exchanging operation.

The present invention aims to eliminate the above mentioned difficulties.

According to the present invention there is provided a disc brake comprising a carrier member, a caliper member supported on the carrier member and being displaceable relative thereto in the direction of the axis of a disc, and a pair of pins guiding the displacement of the caliper member, characterized in that engaging portions are respectively formed on or secured to the caliper and carrier members to engage with one another when one of the pins is removed, the caliper member is rotated around the other pin by a predetermined angle, and when the caliper member is displaced in one direction with respect to the axis of the disc.

Preferably, the engaging portions engage with one another to restrict the axial movement of the caliper member with respect to the carrier member so as to prevent the pin being extracted out of the bore and also to

-3-

restrict the angular movement of the caliper member around the pin so as to prevent the interference between the caliper member and the friction pads being radially outwardly extracted or radially inwardly inserted.

The present invention will now be described further, by way of example only, with reference to the accompanying drawings, in which:-

Fig.1 is a schematic front view of a disc brake with the caliper member thereof taking an angularly rotated position;

Fig.2 is a partial sectional view taken along line II-II in Fig.1;

Fig.3 is a view similar to Fig.2 but showing a modified form;

Fig.4 is a schematic front view of another embodiment of a disc brake with the caliper member thereof being angularly rotated;

Fig.5 is a partial sectional view taken along line V-V in Fig.4;

Fig.6 is a view similar to Fig.5 with the caliper member being displaced from the position of Fig.5;

Fig.7 is a view similar to Fig.6 with the caliper member being further displaced in the axial direction;

Fig.8 is a perspective view of the carrier member of Fig.4, and

Fig.9 is a perspective view of the caliper member of Fig.4.

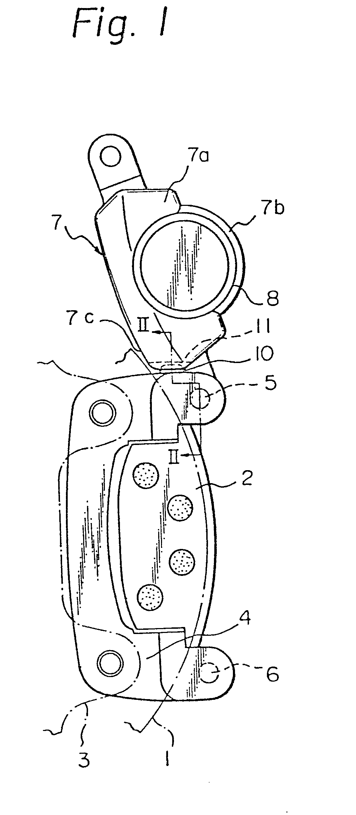

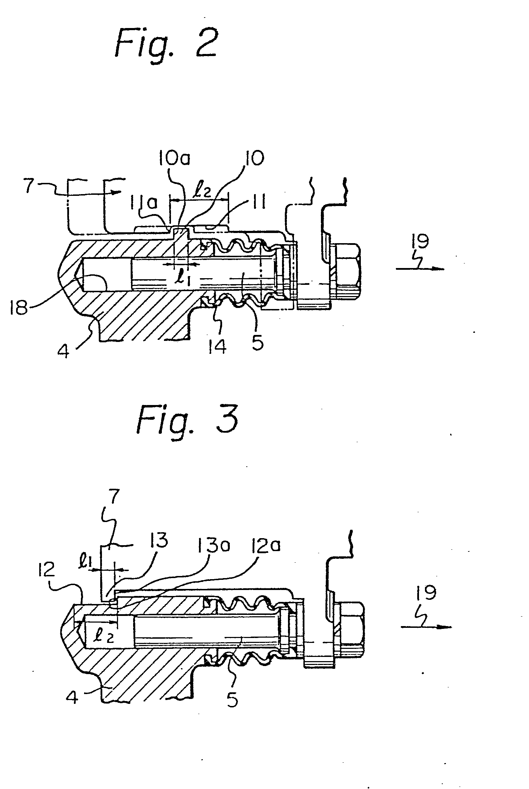

The disc brake shown in Figs. 1 and 2 comprises a carrier member 4 secured to a non-rotatable part of a vehicle through a bracket 3, a pair of friction pads 2 (only one is shown in Fig.1) disposed on the opposite sides of a rotatable disc 1, and a caliper member 7 which is supported on the carrier member 4 through a pair of parallel pins 5 and 6. The caliper member 7 includes an arm portion 7b disposed on one side of the disc 1 and incorporating a cylinder to receive therein a piston C,

another arm portion 7a disposed on the other side of the disc 1, and a bridge portion 7c connecting the arm portions 7a and 7b and straddling a portion of the circumference of the disc 1. In operation, one of the friction pads is pressed against the disc by the piston 8, and the reaction force acting on the piston is transmitted through the caliper member 7 to the other friction pad. The caliper member 7 displaces along the pins 5 and 6 in the direction of the axis of the disc with respect to the carrier member 4.

In exchanging the friction pads, one of the pins 6 is removed and the caliper member 7 is angularly rotated around the other pin 5 so that the bridge portion of the caliper member moves out of the position overlying the friction pads. By removing a pad spring (not shown) which is usually interposed between the friction pads and the caliper member, the friction pads can easily be removed from the carrier member. It will be noted that the description has been made with respect to the construction wherein both friction pads are mounted on the carrier member, and circumferentially spaced arm portions straddling the disc are formed on the carrier member, however, the present invention may be applied to disc brakes wherein only one friction pad or the friction pad on the side of the piston 8 is mounted on the carrier member and the other friction pad is secured to the arm portion 7a of the caliper member.

In prior art disc brakes the caliper member 7 supported on the carrier member 4 by the single pin 5 can displace in the direction of arrow 19 as shown in Fig.2 so that the pin 5 will be completely extracted out of a bore 18, since the arm portion 7a which usually engages with an adjacent friction pad to restrict the axial displacement of the caliper member 7 has been displaced from the circumference of the disc 1. Thus, the caliper member 7 will accidentally be separated from the carrier

-5-

member 1, whereby dust may attach on the pin 5 or the bore 18. In reassembling the caliper member with the carrier member, it is necessary to clean the pin and the guide bore and reassemble a boot 14. The operation is troublesome and time consuming.

According to the invention, engaging portions 10 and 11 are formed respectively on the carrier member 4 and the caliper member 7 to engage with one another when the caliper member 7 has angularly been rotated relative to the carrier member to the position of Fig.1 and the carrier member 7 has axially been displaced in the direction of the arrow 19 to a predetermined position such that at least a portion of the pin 5 is received in the bore 18. In the embodiment, the engaging portion 10 is a projection defining a shoulder 10a and the engaging portion 11 is a groove defining a shoulder 11a. The projection 10 has an axial length $\ell_1$ and the projection 11 has an axial length $\ell_2$. The difference between $\ell_2$ and $\ell_1$ is determined by the amount of allowable wear of the friction pads 2. That is, the length $\ell_2 - \ell_1$ is slightly larger than the sum of the maximum allowable wear of the friction pads 2. In Fig.2, the phantom lines show the position of the carrier member 7 when the friction pads are new.

In the modified form shown in Fig.3, a projection 13 defining a shoulder 13a is formed on the caliper member 7 and a groove 12 defining a shoulder 12a is formed in the carrier member 4. In the embodiment, the groove 12 does not restrict the displacement of the caliper member 7 in the direction opposite to the arrow 19.

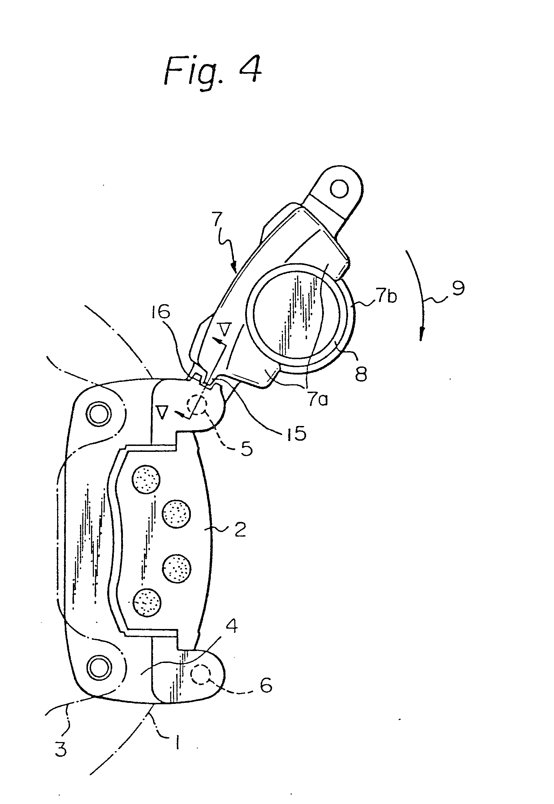

Figs. 4 - 9 show another embodiment of the present invention, and the construction of the embodiment is generally similar to that of the preceding embodiments, thus, parts corresponding the embodiment of Figs.1 and 2 are denoted by corresponding numerals and the description thereof is omitted.

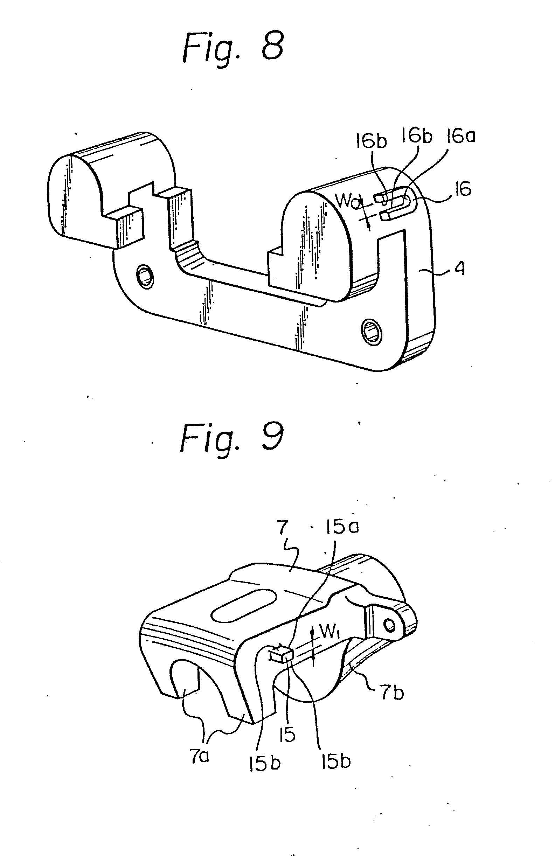

In Fig.4 the angular rotational movement of the caliper member 7 around the pin 5 in the direction of arrow 9 is prevented by the engagement between engaging portions 15 and 16 which are formed respectively on the caliper member 7 and the carrier member 4. The caliper member 7 does not accidentally return to the initial position during the pad exchanging operation, thus, the operation can safely be performed. As clearly shown in Fig.8, the engaging portion 16 formed on the carrier member 4 comprises a U-shaped groove defining a circumferentially extending shoulder 16a and axially extending shoulders 16b. The shoulders 16b are spaced by a width $W_0$. The engaging portion 15 formed on the caliper member 7 comprises a projection defining shoulders 15a and 15b. The thickness of the projection or the distance between the shoulders 15b is $W_1$. The thickness $W_1$ is slightly smaller than the width $W_0$, so that, when the caliper member 7 is angularly rotated around the pin 5 in the direction opposite to the arrow 9 direction by a predetermined angle and, thereafter, the caliper member 7 is displaced with respect to the carrier member 5 in the direction of the axis of the disc 1 and in the direction that the pin 5 projects out of the bore 18, namely in the direction of the arrow 19 by a predetermined distance (as measured from an initial position of the caliper member wherein the friction pads are new), the engaging portion 15 is received in the engaging portion 16 with the shoulders 15a and 16a engaging with one another to prevent the displacement of the caliper member 7 in the arrow 19 direction and, the shoulders 15b and 16b engaging with one another to prevent the angular rotational movement of the caliper member 7 in the arrow 9 direction.

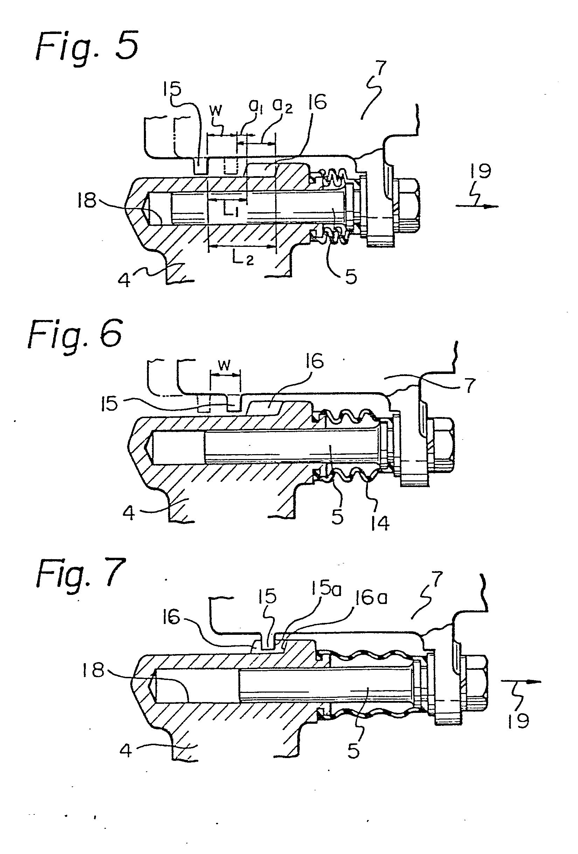

The initial position of the caliper member 7 mentioned as above is shown by full lines in Fig.5, and by phantom lines in Fig.6. The position of the caliper member 7 shown in phantom lines in Fig.5 and in full lines in Fig.6 is the position when the friction pads have worn by the maximum allowable amount, and the distance as measured from the initial position is depicted by $W$ which is equal to the amount of the maximum allowable wear of the friction pads. The engaging portion 15 is received in the engaging portion 16 when the caliper member 7 is displaced in the arrow 19 direction from the initial position by a distance $L_1$ which is defined by $L_1 = W + a_1$. The dimension $a_1$ prevents the interference between the engaging portions 15 and 16 in angularly rotating the caliper member 7 in the direction opposite to the arrow 9 direction, thus, it is not necessary to determine the dimension $a$ so large.

When the caliper member 7 has angularly been rotated to the position shown in Fig.4 and, thereafter, axially been displaced from the initial position thereof shown in full lines in Fig.5, in the arrow 19 direction by a distance exceeding $L_1$, the engaging portion 15 is received in the U-shaped engaging portion 16, and the angular movement of the caliper member 7 is prevented by the mutual engagement between the shoulders 15b and 16b.

When the caliper member 7 is displaced in the arrow 19 direction by a distance $L_2$ as measured from the initial position, the engaging portion 15 engages with the bottom surface of the U-shaped engaging portion 16, thereby preventing the further displacement of the caliper member 7 in the arrow 19 direction. The pin 5 is reliably retained in the bore 18, thereby eliminating troublesome reassembling operation which has been experienced in the prior art disc brake.

In the embodiments aforementioned, the mutually engaging shoulders 15a and 16a generally extend in the direction of the circumference of the disc, and the mutually engaging shoulders 15b and 16b generally extend

0023138

-8-

in the direction of the axis of the disc, however, the engaging portion 10 and 11, 12 and 13, and 15 and 16 may have any desired forms defining mutually engaging surfaces of any desired configurations which are adapted to restrict the relative movement between the caliper and carrier members. For example, the surfaces 15a and 15b and, accordingly, the surfaces 16a and 16b may be substituted by surfaces inclined relative to the axial and circumferential directions.

As described heretofore, the pad exchanging operation can be performed safely, easily and quickly according to the invention.

-9-

CLAIMS.

1. A disc brake comprising a carrier member 4, a caliper member 7 supported on the carrier member 4 and being displaceable relative thereto in the direction of the axis of a disc, and a pair of pins 5,6 guiding the displacement of the caliper member 7, characterized in that engaging portions 10,11; 13,12; 15,16 are respectively formed on or secured to the caliper and carrier members to engage with one another when one of the pins 6 is removed, the caliper member 7 is rotated around the other pin 5 by a predetermined angle, and when the caliper member is displaced in one direction with respect to the axis of the disc.

2. A disc brake as claimed in claim 1, characterised in that said engaging portions comprise a projection 10, 13, 15 formed on either of the caliper and carrier members and a groove 11, 12, 16 formed in the other of two members.

3. A disc brake as claimed in claim 1, characterised in that said engaging portions comprise projections 10,11; 13,12; 15,16 formed respectively on the carrier and caliper members, and engage with one another when the caliper member is displaced relative to the carrier member in the direction such that said other pin projects out of a bore receiving said pin.

4. A disc brake as claimed in claim 2, characterised in that the groove 16 has a generally U-shaped form to restrict the displacement of the caliper member 7 with respect to the carrier member 4 in the directions of the circumference of the disc and one direction along the axis of the disc.

5. A disc brake as claimed in claim 1, characterised in that the engaging portion 15,16 of either of the caliper and carrier members is defined by a shoulder 15a, 16a extending in the direction of the circumference of the disc and another shoulder 15b,16b extending in the
direction of the axis of the disc, said engaging portion
15 engages with the engaging portion 16 of the other of
said two members when the caliper is displaced with
respect to the carrier member in one axial direction
and in one circumferential direction.

0023138

A³⁸⁸/1

# Fig. 1

## Fig. 2

## Fig. 3

0023138

## Fig. 4

0023138

## Fig. 5

## Fig. 6

## Fig. 7

Fig. 8

Fig. 9